# EUROPÄISCHE PATENTSCHRIFT

(11) **EP 0 653 322 B1**
(45) Veröffentlichungstag und Bekanntmachung des Hinweises auf die Patenterteilung: **24.09.1997**
(21) Anmeldenummer: 94111680.8
(22) Anmeldetag: 27.07.1994
(51) Int. Cl.: B60J 3/02

(54) **Lagerachse für eine Fahrzeugsonnenblende**
Pivot shaft for a vehicle sunvisor
Axe de palier d'un pare-soleil de véhicule

(30) Priorität: 13.11.1993 DE 4338860
(43) Veröffentlichungstag der Anmeldung: 17.05.1995
(73) Patentinhaber: BECKER GROUP EUROPE GmbH, 42285 Wuppertal (DE)
(72) Erfinder: Lecorvaisier, René, F-57470 Hombourg-Haut (FR); Buchheit, Christian, F-57880 Ham Sous Vasberg (FR)

(56) Entgegenhaltungen:
- EP-A- 0 399 368
- EP-A- 0 544 071
- DE-C- 4 118 913
- FR-A- 2 554 395
- US-A- 4 756 570

## Beschreibung

Die Erfindung bezieht sich auf eine Lagerachse für eine Fahrzeugsonnenblende mit L-förmiger Gestaltung, deren einer kurzer Achsschenkel in einem an der Fahrzeugkarosserie zu befestigenden Lagerböckchen und deren anderer, die Klappachse für den Sonnenblendenkörper bildender langer Achsschenkel in einem im Sonnenblendenkörper angeordneten Lagergehäuse drehbar gelagert ist, wobei die Lagerachse im wesentlichen aus einem Stahlrohr besteht, das im Bereich des langen Achsschenkels eine Abflachung aufweist und wobei die Lagerachse in ihrem Winkelbereich einen durch Umspritzen aufgebrachten Kunststoffkörper trägt, der sich über einen axialen Teilbereich des langen Achsschenkels, jedoch vor der Abflachung endend und über den kurzen Achsschenkel bis kurz vor dessen freien Ende erstreckt. Eine solche Lagerachse ist durch die US-A-4 756 570 bekannt geworden.

Lagerachsen für Fahrzeugsonnenblenden wurden herkömmlicherweiser aus massiven Rundstahl gefertigt. Seit geraumer Zeit ist man jedoch aus Gewichts- und Preisgründen dazu übergegangen, für die Herstellung der Lagerachse ein Kunststoffmaterial einzusetzen und die Lagerachse als Kunststoff-Spritzgußkörper auszubilden. Der Einsatz einer Lagerachse aus Kunststoff hat sich aber nun als nicht unbedingt zweckmäßig erwiesen. Bei Fahrzeugen, die einer Nachlackierung unterzogen werden müssen, verbleiben die montierten Sonnenblenden üblicherweise in der montierten Lage am Fahrzeug, und zwar in ihrer am Fahrzeughimmel unter Vorspannung anliegenden Nichtgebrauchslage. Durch die Nachlackierungstemperatur von ca. 80 °C verdreht sich, bedingt durch die Vorspannung der Sonnenblende am Fahrzeughimmel, die Raststellung der Sonnenblende am Himmel. Das bedeutet, daß die Vorspannung verlorengeht mit der äußerst unangenehmen Folge, daß nunmehr Klappergeräusche auftreten können.

Lagerachsen für Fahrzeugsonnenblenden, die aus Kunststoff bestehen, sind in der EP-A-0 399 368 wie auch durch die DE-C-4 118 913 bekannt geworden. Diese Druckschriften offenbaren aber auch, daß es bekannt ist, die Abflachung einer Lagerachse von einer am Lagergehäuse des Sonnenblendenkörpers angeordneten Rastfeder zu beaufschlagen, um den Sonnenblendenkörper in seiner Nichtgebrauchslage mit Vorspannung am Fahrzeughimmel anliegend zu halten und den kurzen Achsschenkel als mit einem Pilzkopf endenden Lagerschaft auszubilden.

Der vorliegenden Erfindung liegt nun die Aufgabe zugrunde, eine Qualitätsverbesserung herzustellen und der Abnehmerschaft eine Lagerachse der eingangs genannten Art zur Verfügung zu stellen, die sich im montierten Zustand optisch nicht von der bisher eingesetzten Lagerachse unterscheidet, jedoch sicherstellt, daß auch bei der Nachlackierung eines Fahrzeugs die jeweilige Vorspannung der Sonnenblende am Fahrzeughimmel nicht mehr verloren gehen kann, wobei die Lagerachse insbesondere für mit einer Beleuchtungseinrichtung ausgestattete Sonnenblenden einsetzbar sein soll.

Zur Lösung dieser Aufgabe ist nun erfindungsgemäß vorgesehen, daß die Abflachung von einer am Lagergehäuse des Sonnenblendenkörpers angeordneten Rastfeder beaufschlagbar ist, um den Sonnenblendenkörper in seiner Nichtgebrauchslage mit Vorspannung am Fahrzeughimmel anliegend zu halten, daß ein freier Endbereich des kurzen Achsschenkels einen Durchmesser aufweist, der gegenüber dem sonstigen Lagerachsendurchmesser wesentlich verringert ist, daß der sich über den kurzen Achsschenkel erstreckende Bereich des Kunststoffkörpers als mit einem Pilzkopf endender Lagerschaft ausgebildet ist, daß auch der freie axiale Endbereich des langen Achsschenkels einen gegenüber dem sonstigen Lagerachsendurchmesser wesentlich verringerten Durchmesser aufweist, daß am Endbereich des im Durchmesser verringerten Achsschenkels eine frei auslaufende radiale Öffnung vorgesehen ist, daß in den Endbereichen des langen Achsschenkels ein Kontaktelement eingesetzt ist, welches einen zylindrischen Schaft und einen zylindrischen Kopf aufweist und auf dem Schaft einen ersten, zwischen dem freien Ende des langen Achsschenkels und dem Kopf des Kontaktelementes zur Anordnung kommenden Isolierschlauch und einen zweiten, den Schaft von der Innenwandung des langen Achsschenkels trennenden Isolierschlauch trägt, daß das Kontaktelement mit einem abisolierten Ende eines durch die Lagerachse geführten isolierten Leiterdrahts elektrisch leitend verbunden ist und daß das freie Ende des kurzen Achsschenkels mit einem Masseanschlußleiter elektrisch leitend verbunden ist.

Durch diese erfindungsgemäßen Maßnahmen ergibt sich zunächst der Vorteil, daß die Lagerachse, auch wenn sie durch größere Temperaturänderungen belastet wird, eine nichtveränderbare, durch die Abflachung gebildete Rastfläche für die Rastfeder aufweist. Ein Absacken des Sonnenblendenkörpers und ein Verlorengehen der den Klappergeräuschen entgegenwirkenden Vorspannung ist nun nicht mehr möglich. Dabei ist wichtig, daß der durch Umspritzen aufgebrachte Kunststoffkörper vor der Abflachung endet, denn wenn sich der Kunststoffkörper auch über die Abflachung erstrecken und seinerseits eine Abflachung aufweisen würde, könnten sich die eingangs geschilderten Probleme aufs Neue ergeben. Wichtig ist auch, daß der kurze Achsschenkel einen im Durchmesser verjüngten Bereich aufweist, weil hierdurch der Kunststoffkörper mit seinem Lagerschaft auf ein Maß gebracht werden kann, das den Abmessungen der Lagerbohrung im Lagerböckchen entspricht. Damit können die bisherigen Lagerböckchen, ohne kostenaufwendige Änderungen vornehmen zu müssen, weiterhin eingesetzt werden. Wenn die Lagerachse im Lagerböckchen und im Lagergehäuse des Sonnenblendenkörpers montiert ist, bleibt nur der Kunststoffkörper sichtbar, so daß sich die erfindungsgemäße Lagerachse optisch nicht von herkömmlichen unterscheidet, womit Kundenwünschen Rechnung getragen werden konnte.

Sonnenblenden für Fahrzeuge sind oftmals mit einem Kosmetikspiegel und einer Beleuchtungseinrichtung, die eine Benutzung des Spiegels auch bei Dunkelheit erlaubt, ausgerüstet. Durch die aufgezeigten erfindungsgemäßen Maßnahmen ist eine Lagerachse geschaffen, über die die Verbindung zwischen der Beleuchtungseinrichtung und dem Stromversorgungsnetz eines Fahrzeugs einfach und störungsfrei herzustellen ist. Die Lagerachse bildet dabei gleichzeitig einen im Aufbau äußerst einfachen, nur durch den Sonnenblendenkörper zu betätigenden Schalter. Die Durchmesserreduzierung des Lagerachsenendbereichs erlaubt den Einsatz kleindimensionierter Kontaktelemente, wodurch wiederum der Sonnenblendenkörper relativ dünn ausgebildet werden kann, was von der Abnehmerschaft erwünscht ist.

Zur Erhöhung der Stabilität der erfindungsgemäßen Lagerachse trägt bei, daß gemäß einer Weiterbildung der Erfindung vorgesehen ist, die Abflachung als Prägezone auszubilden.

Ein Ausführungsbeispiel der Erfindung wird im folgenden anhand der Zeichnungen näher erläutert und es zeigen:
- Fig. 1: die Lagerachse mit montiertem Lagerböckchen und angedeutetem Sonnenblendenkörper,

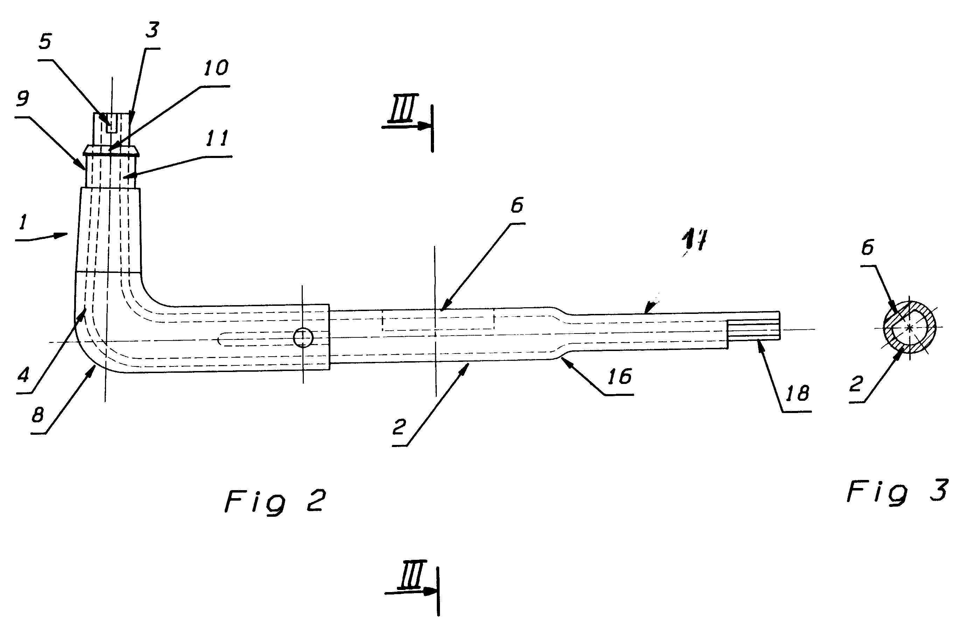

- Fig. 2: eine vergrößerte Ansicht der Lagerachse nach Fig. 1
und
- Fig. 3: einen Schnitt III - III nach Fig. 2.

Die Lagerachse besteht aus einem L-förmigen verchromten Stahlrohr und weist einen ersten kurzen Achsschenkel 1 und einen zweiten langen Achsschenkel 2 auf. Der kurze Achsschenkel 1 weist einen freien Endbereich 3 mit einem Durchmesser auf, der gegenüber dem sonstigen Lagerachsendurchmesser wesentlich verringert ist. Der im Durchmesser über eine Verkröpfungszone 4 verjüngte Achsschenkelbereich 3 erstreckt sich über einen wesentlichen Bereich der axialen Länge des kurzen Achsschenkels 1. Die Lagerachse kann einen unverdünnten Durchmesser von ca. 8 mm und einen verdünnten Durchmesser im Endbereich 3 von ca. 5,5 mm aufweisen. Am freien Ende des kurzen Achsschenkels befindet sich eine Schlitzöffnung 5.

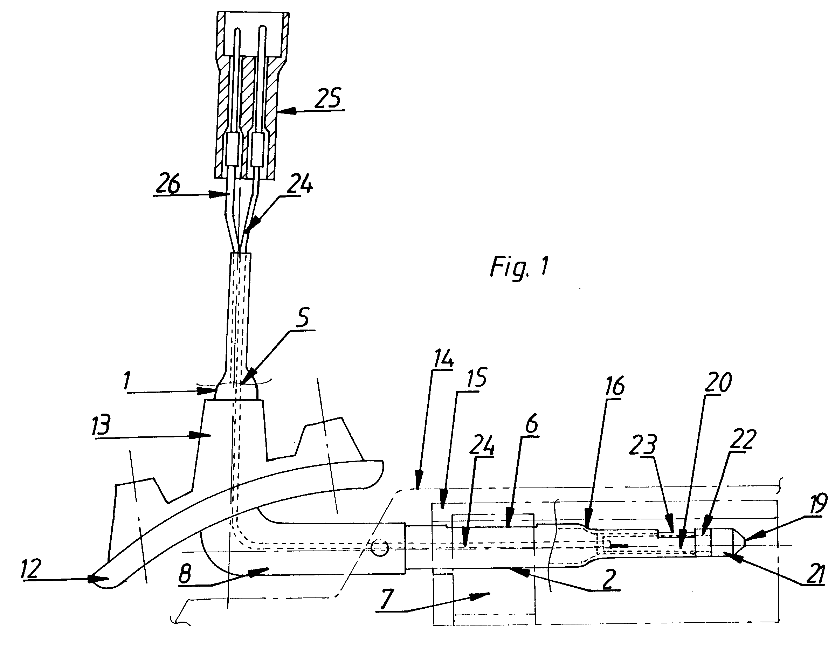

Der lange Achsschenkel 2 ist über seinen wesentlichen axialen Längenbereich mit einem großen, d. h. unveränderten Durchmesser von z. B. 8 mm ausgebildet. In diesem Längenbereich ist eine Abflachung 6 zum Angriff einer Rastfeder 7, die in Fig. 1 gestrichelt angedeutet ist, ausgebildet, und zwar durch eine die Rohrwandstärke erhaltende Prägezone, die sich z. B. über einen axialen Längenbereich von 17,5 mm erstreckt.

Die Lagerachse trägt in ihrem Winkelbereich einen durch Umspritzen aufgebrachten Kunststoffkörper 8, der sich sowohl über einen axialen Teilbereich des langen Achsschenkels und einem axialen Teilbereich des kurzen Achsschenkels 1 erstreckt. Der Kunststoffkörper 8 endet am langen Achsschenkel 2 mit Abstand vor der Abflachung 6 und behindert damit nicht das Zusammenwirken des metallischen Achsschenkelteils nebst Abflachung 6 mit der Rastfeder 7. Der Kunststoffkörper 8 endet am kurzen Achsschenkel 1 vor dessen Ende und läßt damit zumindest die Schlitzöffnung 5 frei. Der Endbereich des Kunststoffkörpers 8 am kurzen Achsschenkel 1 ist als Lagerschaft 9 mit einem endseitigen Pilzkopf 10 ausgebildet. Zwischen dem Lagerschaft 9 und dem übrigen Kunststoffkörper 8 befindet sich eine Ringschulter 11. Der kurze Achsschenkel 1 ist an ein an einer Fahrzeugkarosserie zu befestigendes Lagerböckchen 12 montierbar, dessen Dom 13 nach der Montage zwischen dem Pilzkopf 10 und der Ringschulter 11 sitzt, während der Lagerschaft 9 drehbeweglich von der Lagerbohrung des Lagerböckchens 12 aufgenommen ist.

Der lange Achsschenkel 2 der Lagerachse dient als Klappachse für den in Fig. 1 strichpunktiert angedeuteten Sonnenblendenkörper 14 und ist daher in einem im Sonnenblendenkörper 14 angeordneten Lagergehäuse 15, das auch die Rastfeder 7 trägt, drehbar gelagert.

Die neue Lagerachse ist bevorzugt so ausgebildet, daß sie sowohl für Sonnenblenden ohne als auch mit einer Beleuchtungseinrichtung gleichermaßen einsetzbar ist. Aus diesem Grund weist auch der lange Achsschenkel 2 im Anschluß an eine Verkröpfungszone 16 einen freien Endbereich 17 mit gegenüber dem sonstigen Lagerachsendurchmesser wesentlich verringerten Durchmesser auf, etwa dem des freien Endbereichs 3 am kurzen Achsschenkel 1 entsprechend. Am freien Endbereich 17 ist weiterhin eine freiauslaufende radiale Öffnung 18 vorgesehen, die durch eine Fräsbearbeitung gebildet sein kann.

Sofern die Lagerachse für eine Sonnenblende mit Beleuchtungseinrichtung eingesetzt werden soll, wird in den Endbereich 17 des langen Achsschenkels 2 ein Kontaktelement 19 eingesetzt, welches einen zylindrischen Schaft 20 und einen zylindrischen Kopf 21 aufweist. Zuvor wird auf den Schaft 20 ein erster, zwischen dem freien Ende des langen Achsschenkels 2 und dem Kopf 21 des Kontaktelements 19 zur Anordnung kommender Isolierschlauch 22 und ein zweiter, den Schaft 20 von der Innenwandung des langen Achsschenkels 2 trennender Isolierschlauch 23 aufgeschoben. Ein elektrischer, isolierter Leiter 24 ist durch die Lagerachse hindurch geführt, endseitig abisoliert und am freien Schaftende angelötet, wobei es sich empfiehlt, am freien Schaftende ein Sackloch für die Aufnahme des abisolierten Leiterendes vorzusehen. Das andere Ende des elektrischen Leiters 24 tritt aus dem kurzen Schenkel 1 heraus und ist mit einer Steckergehäuseeinheit 25 verbunden. Mit der Steckergehäuseeinheit 25 ist auch ein zweiter elektrischer Leiter 26, der als Masseanschluß dient, verbunden, dessen anderes Ende in die Schlitzöffnung 5 eingreift und hier verlötet ist.

Am Kopf 21 des Kontaktelements 19 kann nun ein zur Beleuchtungseinrichtung der Sonnenblende gehörendes Kontaktelement permanent anliegen, während ein Masseanschluß durch ein zweites Kontaktelement nur zustande kommt, wenn sich das entsprechende Kontaktelement kontaktbildend auf den Achsschenkelbereich 17 außerhalb der radialien Öffnung 18 abstützt. Der Strom wird unterbrochen, wenn das zweite Kontaktelement durch Klappen des Sonnenblendenkörpers 14 in Anlage an den Isolierschlauch 23 gelangt.

## Patentansprüche

1. Lagerachse für eine Fahrzeugsonnenblende mit L-förmiger Gestaltung, deren einer kurzer Achsschenkel (1) in einem an der Fahrzeugkarosserie zu befestigenden Lagerböckchen (12) und deren anderer, die Klappachse für den Sonnenblendenkörper (14) bildender langer Achsschenkel (2) in einem im Sonnenblendenkörper (14) angeordneten Lagergehäuse (15) drehbar gelagert ist, wobei die Lagerachse im wesentlichen aus einem Stahlrohr besteht, das im Bereich des langen Achsschenkels (2) eine Abflachung (6) aufweist und wobei die Lagerachse in ihrem Winkelbereich einen durch Umspritzen aufgebrachten Kunststoffkörper (8) trägt, der sich über einen axialen Teilbereich des langen Achsschenkels (2), jedoch vor der Abflachung (6) endend und über den kurzen Achsschenkel (1) bis kurz vor dessen freien Ende erstreckt, dadurch gekennzeichnet, daß die Abflachung (6) von einer am Lagergehäuse (15) des Sonnenblendenkörpers (14) angeordneten Rastfeder (7) beaufschlagbar ist, um den Sonnenblendenkörper (14) in seiner Nichtgebrauchslage mit Vorspannung am Fahrzeughimmel anliegend zu halten, daß ein freier Endbereich (3) des kurzen Achsschenkels (1) einen Durchmesser aufweist, der gegenüber dem sonstigen Lagerachsendurchmesser wesentlich verringert ist, daß der sich über den kurzen Achsschenkel (1) erstreckende Bereich des Kunststoffkörpers (8) als mit einem Pilzkopf (10) endender Lagerschaft (9) ausgebildet ist, daß auch der freie axiale Endbereich (17) des langen Achsschenkels (2) einen gegenüber dem sonstigen Lagerachsendurchmesser wesentlich verringerten Durchmesser aufweist, daß am Endbereich (17) des im Durchmesser verringerten Achsschenkels (2) eine frei auslaufende radiale Öffnung (18) vorgesehen ist, daß in den Endbereichen (17) des langen Achsschenkels (2) ein Kontaktelement (19) eingesetzt ist, welches einen zylindrischen Schaft (20) und einen zylindrischen Kopf (21) aufweist und auf dem Schaft (20) einen ersten, zwischen dem freien Ende des langen Achsschenkels (2) und dem Kopf (21) des Kontaktelementes (19) zur Anordnung kommenden Isolierschlauch (22) und einen zweiten, den Schaft (20) von der Innenwandung des langen Achsschenkels (2) trennenden Isolierschlauch (23) trägt, daß das Kontaktelement (19) mit einem abisolierten Ende eines durch die Lagerachse geführten isolierten Leiterdrahts (24) elektrisch leitend verbunden ist und daß das freie Ende des kurzen Achsschenkels (1) mit einem Masseanschlußleiter (26) elektrisch leitend verbunden ist.

2. Lagerachse nach Anspruch 1, dadruch gekennzeichnet, daß die Abflachung (6) als Prägezone ausgebildet ist.

## Claims

1. Vehicle-sun-visor bearing spindle of L-shaped configuration, of which one, short spindle leg (1) is mounted rotatably in a bearing block (12), which can be fastened on the vehicle bodywork, and the other, long spindle leg (2), which forms the swing-action spindle for the sun-visor body (14), is mounted rotatably in a bearing housing (15) arranged in the sun-visor body (14), the bearing spindle essentially comprising a steel tube which has a flattened section (6) in the region of the long spindle leg (2), and a plastic body (8) being applied by injection moulding around the angled region of the bearing spindle and extending over an axial subregion of the long spindle leg (2), but terminating before the flattened section (6), and extending over the short spindle leg (1) to just before the free end thereof, characterized in that a stop spring (7) arranged on the bearing housing (15) of the sun-visor body (14) can act on the flattened section (6) in order to keep the sun-visor body (14), under prestressing, resting against the vehicle roof lining when it is not in use, in that a free end region (3) of the short spindle leg (1) has a diameter which is considerably reduced in comparison with the rest of the bearing-spindle diameter, in that that region of the plastic body (8) which extends over the short spindle leg (1) is designed as a bearing shank (9) terminating with a mushroom head (10), in that the free axial end region (17) of the long spindle leg (2) also has a diameter which is considerably reduced in comparison with the rest of the bearing-spindle diameter, in that a freely tapering radial opening (18) is provided on the end region (17) of the reduced-diameter spindle leg (2), in that there is inserted into the end region (17) of the long spindle leg (2) a contact element (19) which has a cylindrical shank (20) and a cylindrical head (21) and bears, on the shank (20) a first insulating tube (22), which is arranged between the free end of the long spindle leg (2) and the head (21) of the contact element (19), and a second insulating tube (23), which separates the shank (20) from the inner wall of the long spindle leg (2), in that the contact element (19) is connected in an electrically conductive manner to a bared end of an insulated conductor wire (24) running through the bearing spindle, and in that the free end of the short spindle leg (1) is connected in an electrically conductive manner to an earth connection conductor (26).

2. Bearing spindle according to Claim 1, characterized in that the flattened section (6) is designed as a stamped zone.

## Revendications

1. Axe de palier pour un pare-soleil de véhicule, ayant une forme en L, dont une branche d'axe courte (1) est montée tournante sur de petits blocs de palier (12), à fixer sur la carrosserie du véhicule, et l'autre branche d'axe longue (2) constituant l'axe de rabattement du corps de pare-soleil (14) est montée tournante dans un boîtier de palier (15) disposés dans le corps de pare-soleil (14), l'axe de palier étant constitué essentiellement d'un tube en acier qui présente un méplat (6), dans la zone de la branche d'axe longue (2), et l'axe de palier portant dans sa plage de débattement angulaire un corps en matière plastique (8) surmoulé par injection d'enrobage, qui s'étend sur une zone partielle axiale de la branche d'axe longue (2), en finissant cependant avant le méplat (6) et s'étend sur la branche d'axe courte (1) jusque peu avant son extrémité libre, caractérisé en ce que le méplat (6) peut être sollicité par un ressort d'encliquetage (7) disposé sur le carter de palier (1) du corps de pare-soleil (14), afin de maintenir en appui le corps de pare-soleil (14) dans sa position de non-utilisation, avec une précontrainte, sur le plafond d'habitacle, en ce qu'une zone d'extrémité libre (3) de la branche d'axe courte (1) présente un diamètre notablement diminué par rapport au diamètre du reste de l'axe de palier, en ce que la zone s'étendant sur l'axe de branche d'axe courte (1), du corps en matière plastique (8) est réalisée sous forme de tige de tourillonnement (9) s'achevant par une tête en champignon (10), en ce qu'également la zone d'extrémité axiale (17) libre de la branche d'axe longue (2) présente un diamètre notablement diminué par rapport au diamètre du reste de l'axe de palier, en ce que sur la zone d'extrémité (17) de la branche d'axe (2) à diamètre diminué est prévue une ouverture radiale (18) débouchant librement, en ce que dans les zones d'extrémité (17) de la branche d'axe longue (2) est inséré un élément de contact (19), qui présente une tige cylindrique (20) et une tête cylindrique (21) et porte sur la tige (20) un premier tuyau isolant (22) venant se placer entre l'extrémité libre de la branche d'axe longue (2) et la tête (21) de l'élément de contact (19) et une deuxième tuyau isolant (23) assurant la séparation entre la tige (20) et la paroi intérieure de la branche d'axe longue (2), en ce que l'élément de contact (19) est relié d'une façon conductrice de l'électricité à une extrémité dénudée d'un fil conducteur (24) isolé guidé à travers l'axe de palier, et en ce que l'extrémité libre de la branche d'axe courte (1) est reliée d'une façon conductrice de l'électricité à un conducteur de raccordement de masse (26).

2. Axe de palier selon la revendication 1, caractérisé en ce que le méplat (6) est réalisé sous la forme d'une zone de déformation du matériau.
